# EUROPÄISCHE PATENTSCHRIFT

(11) **EP 1 653 139 B1**
(45) Veröffentlichungstag und Bekanntmachung des Hinweises auf die Patenterteilung: **04.07.2007**
(21) Anmeldenummer: 04025601.8
(22) Anmeldetag: 28.10.2004
(51) Int. Cl.: F16L 23/024, F16L 23/22

(54) **Förderrohr für den Feststofftransport**
Conveying pipe for solid matter
Tuyau de transport pour matières solides

(43) Veröffentlichungstag der Anmeldung: 03.05.2006
(73) Patentinhaber: Esser-Werke KG, 59581 Warstein (DE)
(72) Erfinder: Esser, Alexander, 59581 Warstein (DE)
(74) Vertreter: Ksoll, Peter

(56) Entgegenhaltungen:
- DE-A1- 19 607 871
- DE-A1- 19 809 529
- FR-A- 2 109 232
- US-A- 3 731 954
- US-A- 5 044 670

## Beschreibung

Die Erfindung betrifft ein Förderrohr für den Feststofftransport mit einem Rohrkörper, der an jedem Ende einen klebetechnisch festgelegten Kupplungsbund aufweist.

Die Förderung von Feststoffen, beispielsweise von Baustoffen, Beton, Kies oder Sand, erfolgt pneumatisch oder hydraulisch in Rohrsträngen, welche aus mehreren miteinander verbundenen Förderrohren zusammengesetzt sind. Für die Kopplung der Förderrohre sind diese jeweils endseitig mit Kupplungsbunden ausgerüstet. Über die Kupplungsbunde erfolgt die Verbindung der Förderrohre entweder durch Kupplungsschellen oder bei mit Bohrungen versehenen Kupplungsbunden durch Schraubbolzen.

Bei den derzeit in der Praxis fast ausschließlich zum Einsatz gelangenden Förderrohren sind die Kupplungsbunde mit den Rohrkörpern verschweißt. Der Wärmeeinfluss beim Schweißvorgang kann aber nachteilige Gefügeveränderungen an den Förderrohren im Verbindungsbereich hervorrufen.

Durch die DE-C-196 07 871 zählt ein Förderrohr zum Stand der Technik, bei dem die Kupplungsbunde mit der äußeren Oberfläche des Rohrendes vollflächig verklebt sind. Dieser Gedanke ist grundsätzlich innovativ, weil ein nachteiliger Wärmeeinfluss im Fügebereich vermieden wird. In der Praxis ist es jedoch immer wieder zu Problemen gekommen, weil bei solchen Förderrohren Undichtigkeiten festgestellt wurden. Ursächlich hierfür sind Toleranzunterschiede zwischen den Rohrkörpern und den Kupplungsbunden sowie die Qualität der Klebeverbindung. Die schadhaften Förderrohre müssen ausgetauscht werden mit der Folge von Betriebsunterbrechungen und einer generellen Verringerung der Standzeit.

Gemäß dem Oberbegriff des Patentanspruchs 1 zeigt die FR-A-2 102 232 ein Förderrohr, das für den Feststofftransport geeignet ist, mit einem Rohrkörper, wobei an jedem Ende des Rohrkörpers ein Kupplungsbund klebetechnisch festgelegt ist. Stirnseitig vor dem Ende des Rohrkörpers ist eine Dichtung angeordnet.

Auch bei der aus der US-A-3 731 952 bekannten Rohrkupplung können der Rohrkörper und der Kupplungsbund klebetechnisch miteinander verbunden sein.

Der Erfindung liegt, ausgehend vom Stand der Technik, die Aufgabe zugrunde, ein anwendungstechnisch und hinsichtlich der Standzeit verbessertes Förderrohr zu schaffen.

Die Lösung dieser Aufgabe besteht nach der Erfindung in einem Förderrohr mit den Merkmalen von Patentanspruch 1.

Am stirnseitigen Ende eines Kupplungsbundes ist ein radial einwärts gerichteter, umlaufender Kragen vorgesehen. Durch diesen Kragen wird die Dichtung an der Stirnseite des Rohrkörpers eingekammert. Im Bereich des Kupplungsbunds ist ein Verschleißring angeordnet, wobei der Verschleißring zwischen dem Kragen und dem Ende des Rohrkörpers eingegliedert ist und zwischen dem Kragen und dem Verschleißring eine Dichtung angeordnet ist.

Stirnseitig vor den Enden des Rohrkörpers ist eine Dichtung angeordnet, die den Fügespalt zwischen dem Rohrkörper und dem Kupplungsbund abdichtet. Die Dichtung verhindert ein Unterwandern des geklebten Kupplungsbundes durch das im Betrieb unter Druck anstehende Förderfluid. Hierdurch werden Undichtigkeiten an den Kupplungsbunden vermieden. Die Verklebung zwischen Kupplungsbund und der äußeren Oberfläche des Rohrendes erfolgt teil- oder vollflächig und zugfest. Vorzugsweise kommt ein aerob aushärtender Mehrkomponentenkleber zur Anwendung. Durch die klebetechnische Festlegung des Kupplungsbundes ohne Wärmeeinfluss werden nachteilige Gefügeveränderungen, Härtesprünge oder Versprödungen im Material des Förderrohrs vermieden. Die Spannungsverteilung im Bereich der Fügeverbindung ist gleichmäßig. Insgesamt werden Betriebsunterbrechungen verringert und die Standzeit des Förderrohrs bzw. eines aus den erfindungsgemäßen Förderrohren zusammengesetzten Rohrstrangs erhöht.

Vorteilhafte Ausgestaltungen und Weiterbildungen des grundsätzlichen Erfindungsgedankens sind Gegenstand der abhängigen Patentansprüche 2 bis 4.

Als Dichtung kann ein Dichtungsring oder eine Dichtungslage aus einem geeigneten Dichtungswerkstoff zum Einsatz gelangen, beispielsweise aus Gummi oder einem Elastomer. Auch der Klebstoff selber kann Dichtfunktion übernehmen, wenn dieser neben den klebetechnischen Eigenschaften zur Sicherstellung einer hochfesten Klebeverbindung auch dichtende Eigenschaften aufweist.

Der Einsatz von Verschleißringen an den Enden des Rohrkörpers erweist sich im Rahmen der Erfindung generell als vorteilhaft. Die Verschleißringe bestehen aus einem verschleiß- und prallfesten Material, beispielsweise aus einem keramischen Material, Chromcarbid-Guß, aus martensitischem Nickelhartguß (Nihard) oder ähnlichen Verschleißwerkstoffen.

Der Verschleißring ist im Bereich des Kupplungsbundes angeordnet. Hierbei kann auch zwischen dem Verschleißring und dem Ende des Rohrkörpers eine Dichtung eingegliedert sein.

Das erfindungsgemäße Förderrohr kann einlagig, aber auch doppellagig ausgeführt sein. In der doppellagigen Ausführung des Förderrohrs besteht dieses aus einem hochverschleißfesten, gehärteten Innenrohr und einem druckfesten Außenrohr. Das Innenrohr aus einem gehärteten Stahl soll dem zu transportierenden Feststoff einen möglichst langen Verschleißwiderstand entgegensetzen. Das Außenrohr ist gegenüber dem Innenrohr weicher und schlagfester. Dies ist insbesondere im Hinblick auf den Transport sowie Montage- und Demontagevorgänge von Vorteil, da die Förderrohre üblicherweise einer rauhen Handhabung unterworfen sind.

Dem Außenrohr kommt als Stoß- und Schlagschutz eine Hüllfunktion zu. Hierfür genügt es, das Außenrohr dünnwandig auszuführen. Trotzdem ist eine zuverlässige Verbindung mit dem geklebten Kupplungsbund möglich. Demzufolge erlaubt die Erfindung den Einsatz eines gegenüber dem Außenrohr deutlich dickeren Innenrohrs, was sich ebenfalls positiv auf eine Erhöhung der Standzeit des Förderrohrs auswirkt.

Eine die Klebeverbindung zwischen Kupplungsbund und Ende des Rohrkörpers verbessernde Ausgestaltung sieht vor, dass der Kupplungsbund an dem seiner Stirnseite abgewandten, zum Rohrkörper hin gerichteten Bundende, einen Freiraum an seiner inneren Umfangsfläche aufweist. Vorzugsweise weist der Freiraum eine trichterartige Kontur auf. Hierzu ist am Bundende eine sich von der inneren Umfangsfläche nach außen hin erweiternde Schrägfläche vorgesehen. Der Freiraum erleichtert zunächst den Aufschiebvorgang eines Kupplungsbundes beim Verkleben mit dem Ende des Rohrkörpers. Vorteilhaft ist insbesondere, dass durch den Freiraum, insbesondere wenn dieser trichterartig bzw. konisch gestaltet ist, der Klebstoff in den Fügespalt zwischen dem Kupplungsbund und der äußeren Oberfläche am Ende des Rohrkörpers gleitet bzw. hinein gezogen wird. Eine scharfe Kante, die den Klebstoff abscheren könnte, wird vermieden. Ferner baut sich im Freiraum eine Wulst aus Klebstoff auf, die als zusätzliche Dichtung wirkt.

Das erfindungsgemäße Förderrohr ist nachfolgend anhand der Figuren 5 und 6 beschrieben. Die anderen nachfolgend beschriebenen Figuren 1 bis 4 dienen lediglich zur Illustrierung der beanspruchten Erfindung und sind nicht Ausführungsformen der Erfindung, für die Schutz begehrt wird. Es zeigen:
- Figur 1: eine erste Ausführungsform eines Förderrohrs in einem Längsschnitt;
- Figur 1A: in vergrößerter Darstellungsweise den Ausschnitt A der Figur 1;
- Figur 2: eine zweite Ausführungsform eines Förderrohrs, ebenfalls in einem Längsschnitt, und
- Figuren 3 bis 6: vier weitere Ausführungsformen von Förderrohren, jeweils in der Schnittdarstellung eines endseitigen Ausschnitts.

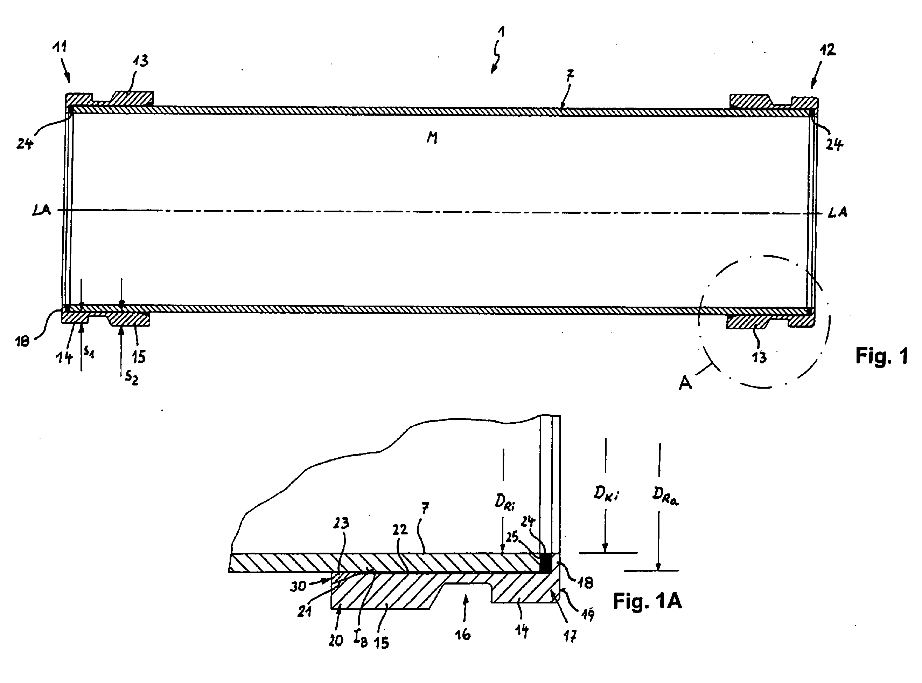

Einander entsprechende Bauteile tragen in den Figuren 1 bis 6 die gleichen Bezeichnungen.

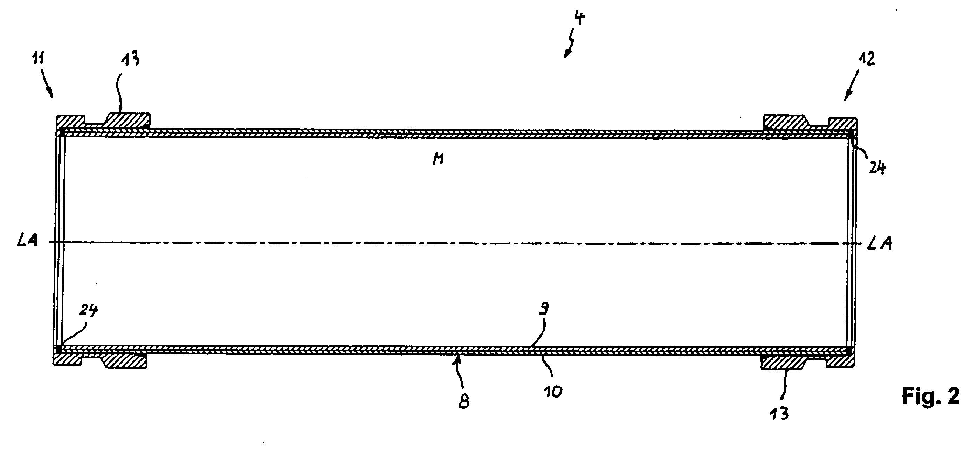

Die Figuren 1, 3 und 5 zeigen einlagige Ausführungsformen eines Förderrohrs 1, 2, 3, wohingegen die Figuren 2, 4 und 6 doppellagige Ausführungsformen von Förderrohren 4, 5, 6 wiedergeben.

Die Förderrohre 1, 2, 3 weisen einen einlagigen Rohrkörper 7 aus einem hoch verschleißfesten gehärteten Stahlwerkstoff auf. Die Förderrohre 4, 5, 6 dagegen sind doppellagig ausgeführt mit einem Rohrkörper 8, der aus einem hoch verschleißfesten gehärteten Innenrohr 9 und einem druckfesten Außenrohr 10 besteht.

An jedem Ende 11, 12 des Rohrkörpers 7 bzw. 8 ist ein Kupplungsbund 13 durch eine vollflächige Verklebung festgelegt. Der Kupplungsbund 13 weist in Rohrlängsachse LA gesehen einen stirnseitigen 1. Bundabschnitt 14 und einen zur Rohrmitte M gerichteten inneren 2. Bundabschnitt 15 auf, zwischen denen eine trapezförmige Kupplungsnut 16 ausgebildet ist. Zu erkennen ist, dass die Wanddicke s₁ des 1. Bundabschnitts 14 geringer bemessen ist als die Wanddicke s₂ des 2. Bundabschnitts 15. Über an die Kupplungsbunde 13 angreifende hier nicht dargestellte Schellen wird zur Herstellung eines Rohrstrangs die Kopplung von Förderrohren 1-6 vorgenommen.

Am stirnseitigen Ende 17 des Kupplungsbundes 13 ist ein radial einwärts gerichteter umlaufender Kragen 18 vorgesehen, wobei der Innendurchmesser D_{Ki} des Kragens 18 dem Innendurchmesser D_{Ri} des Rohrkörpers 7 bzw. 8 entspricht. In jedem Fall ist der Innendurchmesser D_{Ki} kleiner als der Außendurchmesser D_{Ra} des Rohrkörpers 7, 8. Der Kragen 18 bildet einen Anschlag beim Aufschieben eines Kupplungsbunds 13 auf das Ende 11, 12 eines Rohrkörpers 7, 8.

Insbesondere anhand der Darstellung von Figur 1A erkennt man, dass der Kupplungsbund 13 an dem seiner Stirnseite 19 abgewandten Ende 20 eine sich von seiner inneren Umfangsfläche I_{B} nach Außen hin erweiternde umlaufende Schrägfläche 21 aufweist. Hierdurch wird ein Freiraum 30 am Bundende 20 gebildet. Der Freiraum 30 erleichtert den Aufschiebevorgang des Kupplungsbundes 13 auf das Ende 11, 12 des Rohrkörpers 7, 8. Gleichzeitig wird der auf das Ende 11, 12 des Rohrkörpers 7, 8 aufgetragene Klebstoff beim Aufschieben des Kupplungsbunds 13 in den Fügespalt 22 zwischen der Innenfläche des Kupplungsbundes 13 und der äußeren Oberfläche der Enden 11, 12 gedrückt und verteilt. Hierdurch wird eine zugfeste Klebeverbindung sichergestellt. Ein Abscheren des Klebstoffs wird vermieden. Zudem sammelt sich in dem Freiraum 30 zwischen Schrägfläche 21 und der Oberfläche des Rohrkörpers 7, 8 eine umlaufende Wulst 23 aus Klebstoff an, die eine zusätzliche Verklebung und Dichtung bewirkt.

Bei dem Förderrohr 1 bzw. 4 gemäß den Darstellungen in Figur 1 und 2 ist stirnseitig vor den Enden 11, 12 des Rohrkörpers 7 bzw. 8 eine Dichtung 24 angeordnet, gegen die der Kragen 18 des Kupplungsbunds 13 anliegt, so dass die Dichtung 24 gegen die Stirnseite 25 des Endes 11 bzw. 12 gepresst wird. Die Dichtung 24 dichtet den Rohrkörper 7, 8 gegenüber dem Kupplungsbund 13 ab, so dass ein Austritt von Fluid durch den Fügespalt 22 verhindert wird.

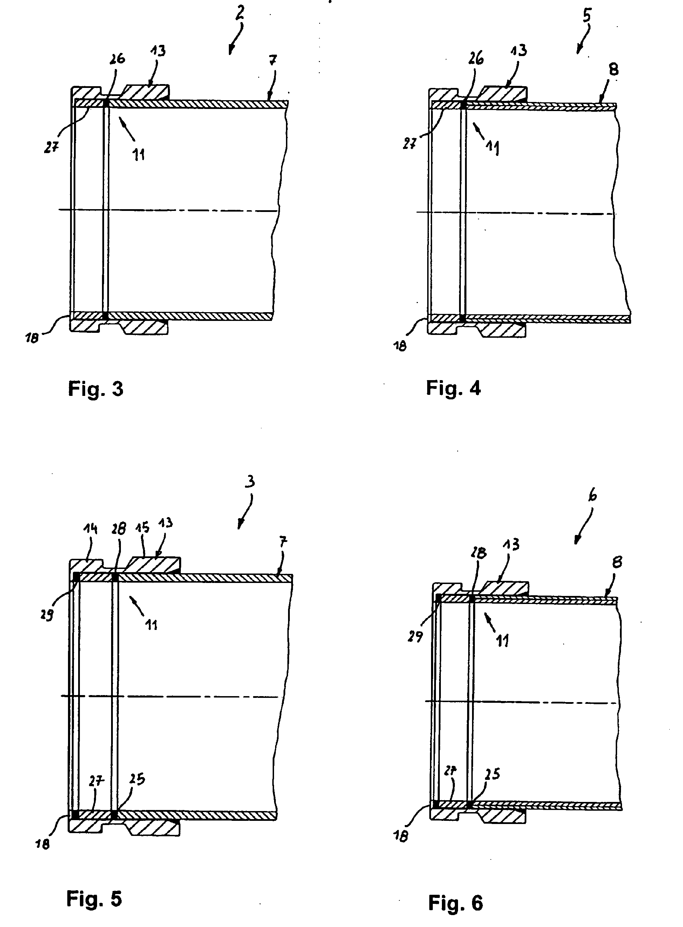

Bei den Ausführungsformen der Förderrohre 2 und 5 gemäß den Darstellungen der Figuren 3 und 4 ist im Bereich des Kupplungsbunds 13 unter Eingliederung einer Dichtung 26 ein Verschleißring 27 vor die Stirnseite 25 der Rohrkörper 7, 8 gesetzt. Der Verschleißring 27 ist mit dem Kupplungsbund 13 verklebt. Stirnseitig ist der Verschleißring 27 durch den Kragen 18 gehalten, der gegen diesen anliegt.

Auch die Förderrohre 3 bzw. 6 (Figuren 5 und 6) sind mit einem eingeklebten Verschleißring 27 ausgerüstet, der zwischen dem Kragen 18 und dem Ende 11, 12 des Rohrkörpers 7, 8 eingegliedert ist. Hierbei ist zwischen der Stirnseite 25 des Rohrkörpers 7, 8 und dem Verschleißring 27 eine Dichtung 28 und zwischen dem Kragen 18 und dem Verschleißring 26 eine Dichtung 29 angeordnet.

### Bezugszeichen:

- 1 -: Förderrohr
- 2 -: Förderrohr
- 3 -: Förderrohr
- 4 -: Förderrohr
- 5 -: Förderrohr
- 6 -: Förderrohr
- 7 -: Rohrkörper
- 8 -: Rohrkörper
- 9 -: Innenrohr
- 10 -: Außenrohr
- 11 -: Ende v. 7, 8
- 12 -: Ende v. 7, 8
- 13 -: Kupplungsbund
- 14 -: 1. Bundabschnitt v. 13
- 15 -: 2. Bundabschnitt v. 13
- 16 -: Kupplungsnut
- 17 -: Ende v. 13
- 18 -: Kragen
- 19 -: Stirnseite v. 13
- 20 -: Ende
- 21 -: Schrägfläche
- 22 -: Fügespalt
- 23 -: Wulst
- 24 -: Dichtung
- 25 -: Stirnseite v. 11, 12
- 26 -: Dichtung
- 27 -: Verschleißring
- 28 -: Dichtung
- 29 - Dichtung:
- 30 -: Freiraum

- I_{B} -: innere Umfangsfläche v. 13
- LA -: Längsachse v. 1-6
- D_{Ki} -: Innendurchmesser v. 18
- D_{Ri} -: Innendurchmesser v. 7, 8
- D_{Ra} -: Außendurchmesser v. 7, 8
- s₁ -: Wanddicke v. 14
- s₂ -: Wanddicke v. 15

## Patentansprüche

1. Förderrohr für den Feststofftransport mit einem Rohrkörper (7, 8), wobei an jedem Ende (11) des Rohrkörpers (7, 8) ein Kupplungsbund (13) unter Eingliederung einer Dichtung (29) klebetechnisch festgelegt ist, **dadurch gekennzeichnet, dass** am stirnseitigen Ende (17) des Kupplungsbunds (13) ein radial einwärts gerichteter umlaufender Kragen (18) vorgesehen ist und im Bereich des Kupplungsbunds (13) ein Verschleißring (27) angeordnet ist, wobei der Verschleißring (27) zwischen dem Kragen (19) und dem Ende (11) des Rohrkörpers (7, 8) eingegliedert ist und zwischen dem Kragen (18) und dem Verschleißring (27) die Dichtung (29) angeordnet ist.

2. Förderrohr nach wenigstens Anspruch 1, **dadurch gekennzeichnet, dass** eine weitere Dichtung (26, 28) zwischen dem Verschleißring (27) und dem Ende (11) des Rohrkörpers (7, 8) eingegliedert ist

3. Förderrohr nach Anspruch 1 oder 2, **dadurch gekennzeichnet, dass** der Kupplungsbund (13) an dem seiner Stirnseite (19) abgewandten Ende (20) einen Freiraum (30) an seiner inneren Umfangsfläche (I_{B}) aufweist.

4. Förderrohr nach wenigstens einem der Ansprüche 1 bis 3, **dadurch gekennzeichnet, dass** der Rohrkörper (8) doppellagig ist.

## Claims

1. Conveying pipe which is intended for transporting solids and has a pipe body (7, 8), a coupling flange (13) being secured by adhesive bonding, with a seal (29) being incorporated in the process, at each end (11) of the pipe body (7, 8), **characterized in that** a radially inwardly directed encircling collar (18) is provided at the end (17) of the coupling flange (13) and a wear ring (27) is arranged in the region of the coupling flange (13), the wear ring (27) being incorporated between the collar (19) and the end (11) of the pipe body (7, 8) and the seal (29) being arranged between the collar (18) and the wear ring (27).

2. Conveying pipe according at least to Claim 1, **characterized in that** a further seal (26, 28) is incorporated between the wear ring (27) and the end (11) of the pipe body (7, 8).

3. Conveying pipe according to Claim 1 or 2, **characterized in that** at the end (20), which is directed away from its end side (19), the coupling flange (13) has a free space (30) on its inner circumferential surface (I_{B}).

4. Conveying pipe according at least to one of Claims 1 to 3, **characterized in that** the pipe body (8) is double-layered.

## Revendications

1. Tuyau de transport pour la manutention de matières solides présentant un corps de tuyau (7, 8), dans lequel à chaque extrémité de tuyau (11) du corps de tuyau (7, 8) est fixé, par une technique de collage, un collet d'accouplement (13) incorporant un élément d'étanchéité (29),
**caractérisé en ce que** sur l'extrémité frontale (17) du collet d'accouplement (13) est prévu un collet circulaire (18) dirigé radialement vers l'intérieur, et au niveau du collet d'accouplement (13), est disposée une bague d'usure (27), **en ce que** la bague d'usure (27) est incorporée entre le collet (19) et l'extrémité (11) du corps du tuyau (7, 8) et, entre le collet (18) et la bague d'usure (27), est disposé l'élément d'étanchéité.

2. Tuyau de transport selon la revendication 1, **caractérisé en ce qu'**un autre élément d'étanchéité (26, 28) est incorporé entre la bague d'usure (27) et l'extrémité (11) du corps de tuyau (7, 8).

3. Tuyau de transport selon la revendication 1 ou 2, **caractérisé en ce que** le collet d'accouplement (13) présente, sur son extrémité (20) détournée de son extrémité frontale (19), un espace libre (30) sur sa face périphérique interne (I_{B}).

4. Tuyau de transport selon l'une quelconque des revendications 1 à 3, **caractérisé en ce que** le corps de tuyau (8) est à double couche.
